# EUROPEAN PATENT SPECIFICATION

(11) **EP 3 317 133 B1**
(45) Date of publication and mention of the grant of the patent: **23.03.2022**
(21) Application number: 16729600.3
(22) Date of filing: 17.06.2016
(51) Int. Cl.: B60H 1/00

(54) **DEVICE FOR HEATING, VENTILATING AND/OR AIR CONDITIONING A VEHICLE INTERIOR**
VERFAHREN ZUR BEHEIZUNG, BELÜFTUNG UND/ODER KLIMATISIERUNG EINES FAHRZEUGINNENRAUMS
DISPOSITIF DE CHAUFFAGE, DE VENTILATION ET/OU DE CLIMATISATION D'UN HABITACLE DE VÉHICULE

(30) Priority: 30.06.2015 DE 102015110481
(43) Date of publication of application: 09.05.2018
(73) Proprietor: Valeo Klimasysteme GmbH, 96476 Rodach (DE)
(72) Inventor: GESELL, Bodo, 96476 Bad Rodach (DE); JAKOB, Danilo, 96476 Bad Rodach (DE); GARTNER, Stefan, 96476 Bad Rodach (DE)
(74) Representative: Valeo Systèmes Thermiques
(86) International application number: PCT/EP2016/064058
(87) International publication number: WO 2017/001215

(56) References cited:
- FR-A1- 2 795 684
- FR-A1- 2 798 322
- US-A1- 2007 243 812
- US-A1- 2012 252 340

## Description

The invention relates to a device for heating, ventilating and/or air conditioning a vehicle interior, with an air-mixing chamber which has a hot air inlet for supplying hot air into the air-mixing chamber, a cold air inlet for supplying cold air into the air-mixing chamber as well as a first mixed air outlet and a second mixed air outlet for discharging mixed air out of the air-mixing chamber into different regions of the vehicle interior. Each mixed air outlet can be assigned a control flap for control of a mixed air mass flow at the respective mixed air outlet. The invention further relates to a vehicle comprising such a device.

In modern vehicle air conditioners, various modes of air distribution are currently defined. For example, in a winter mode, the air mass flow for heater floor outlets is greater than the air mass flow for an air space which lies above the heater floor outlets, whereas in a summer mode of the vehicle air conditioner the air mass flow for the heater floor outlets is lower than the air mass flow for the air space lying above it.

In order to change from one air distribution mode to a different air distribution mode, the control flaps assigned to the mixed air outlets are adjusted in a suitable manner, as a result of which the air flow conditions in the air-mixing chamber change. The different air flow conditions can, however, lead to undesirable changes in the air temperature at the mixed air outlets. For example, a vehicle air conditioner is set in the case of a temperature setting specified by a mixed air flap position in the summer mode so that the mixed air which flows to the heater floor outlets is slightly warmer than the mixed air supplied to the air space lying thereabove. If the vehicle air conditioner is transferred into the winter mode with an identical temperature setting, the air mass flow at the mixed air outlets changes in a desirable manner by means of a predefined adjustment of the control flaps. As a result of this adjustment of the air mass flows, in the case of conventional vehicle air conditioners, the temperature conditions at the mixed air outlets also change in an undesirable manner, for example, a temperature difference between the mixed air supplied to the heater floor outlets and the air space lying thereabove.

The object of the invention is to create a device for heating, ventilating and/or air conditioning a vehicle interior in the case of which air mass flows into different regions of the vehicle interior can be adapted to a desired operating mode with little outlay without significantly changing preset temperature differences between the different interior regions.

FR2795684A1 discloses an air conditioner for a motor vehicle has a casing with an upstream section supplying fresh air to an auxiliary duct with a main feed duct at the rear of the vehicle interior, under control of air regulators. A mixing chamber feeds conditioned air via second ducts to a front section of the vehicle interior. A heating chamber is connected to the mixing chamber and main feed duct.

FR2798322A1 discloses a system having pipe, designed to be fed with treated air, and movable pivoting shutter, designed to control treated air. Shutter has end cooperating in sealed way with wall of pipe along displacement path of shutter which corresponds to normal closed position of pipe. Pipe is shaped so that it forms localized air passage on periphery of wall so that shutter takes up intermediate closing position in which end of shutter is opposite localized air passage which allows flow of calibrated air.

According to the invention, this object is achieved by a device for heating, ventilating and/or air conditioning a vehicle interior, with an air-mixing chamber which has a hot air inlet for supplying hot air into the air-mixing chamber, a cold air inlet for supplying cold air into the air-mixing chamber as well as a first mixed air outlet and a second mixed air outlet for discharging mixed air out of the air-mixing chamber into different regions of the vehicle interior, a first control flap assigned to the first mixed air outlet for control of a mixed air mass flow at the first mixed air outlet, and a second control flap assigned to the second mixed air outlet for control of a mixed air mass flow at the second mixed air outlet, wherein there is assigned to one of the air inlets an adjustable air-guiding element for throttling and/or deflection of the hot air or cold air which flows through one air inlet into the air-mixing chamber. The air flow conditions in the air-mixing chamber changed during the change of the operating mode by adjusting the control flaps are influenced by the adjustable air-guiding element so that the air temperature and/or an existing temperature difference at the mixed air outlets does not change or only changes insignificantly.

Moreover, the device according to the invention can preferably be switched by an electronic control unit automatically between summer and winter mode.

According to the invention, the adjustable air-guiding element is assigned to the cold air inlet and can throttle and/or deflect the cold air which flows through the cold air inlet into the air-mixing chamber.

Moreover, according to the invention, a mixed air flap is provided which sets the ratio between hot air supplied via the hot air inlet and cold air supplied via the cold air inlet for temperature control of the mixed air.

Here, the mixed air flap can sit upstream of a heating element through which air flows in order to control the air quantity which flows through the heating element to the hot air inlet, wherein the mixed air flap can project both into an inflow duct for the air flowing to the heating element and into a cold air duct leading to the cold air inlet in order to change the duct cross-sections.

A vehicle according to the invention comprises a device as described above, and vehicle back seats, wherein the first and second mixed air outlets are assigned to vehicle back seats. A mixed air duct is preferably linked to each mixed air outlet in this case, which mixed air duct extends from the respective mixed air outlet up to an air diffuser in the vehicle back seats.

The first mixed air outlet is preferably assigned to heater floor outlets of the vehicle interior and the second mixed air outlet is assigned to an air space of the vehicle interior which lies above the heater floor outlets.

According to a further embodiment of the device for heating, ventilating and/or air conditioning a vehicle interior, two first mixed air outlets spaced apart from one another are provided, wherein a second mixed air outlet is arranged between the two first mixed air outlets. In particular, both first mixed air outlets in the vehicle interior are arranged laterally opposite and the second mixed air outlet is arranged approximately centrally.

In this embodiment, in each case a deflector can be arranged between the first mixed air outlets and the second mixed air outlet. A stable air mass flow at the mixed air outlets can be set reliably and reproducibly with little outlay via such deflectors.

Moreover, in this embodiment, in each case a pivotable first control flap can be assigned to both first mixed air outlets, wherein the two first control flaps are connected rotationally conjointly by a shaft. As a result of this rotationally conjoint connection, both first control flaps can advantageously be adjusted by only one flap drive.

The adjustable air-guiding element is preferably mechanically coupled to the first control flap and/or the second control flap so that the air-guiding element is adjusted together with the first control flap and/or the second control flap. As a result of this mechanical coupling of the adjustable air-guiding element to the control flaps, a separate drive for adjusting the air-guiding element can be omitted. This leads to an extremely compact and low-cost construction of the device for heating, ventilating and/or air conditioning a vehicle interior.

According to a structurally particularly simple embodiment variant, the adjustable air-guiding element is connected rotationally conjointly to that shaft which also couples the two first control flaps rotationally conjointly to one another.

Moreover, a pivotable second control flap, which is mechanically coupled to the shaft, can be assigned to the second mixed air outlet. In this manner, all the control flaps and, under certain circumstances, also the adjustable air-guiding element can be actuated with only a single drive.

According to a further embodiment of the device for heating, ventilating and/or air conditioning a vehicle interior, the air-guiding element is arranged between the cold air inlet and the second mixed air outlet in the air-mixing chamber. A cold air flow to the second mixed air outlet and thus the air temperature at the second mixed air outlet can thus be influenced in a desirable manner with little outlay via the air-guiding element.

According to yet another embodiment, the air mixing chamber is delimited by a housing, wherein the housing has, adjacent to the adjustable air-guiding element, a throttle projection for setting a desired flow cross-section between the housing and the air-guiding element. The air-guiding action of the adjustable air-guiding element can be changed, in particular increased, with little outlay by such throttle projections on the housing.

Further features and advantages of the invention will become apparent from the following description of preferred embodiments with reference to the drawings. In the drawings:
- Figure 1 shows a schematic view through a device according to the invention for heating, ventilating and/or air conditioning a vehicle interior;
- Figure 2 shows a schematic detailed section of the device according to Figure 1 in the winter mode;
- Figure 3 shows a schematic detailed section of the device according to Figure 1 in the summer mode;
- Figure 4 shows two diagrams in which in each case the air temperature is plotted as a function of the position of a mixed air flap in the winter mode and in the summer mode;
- Figure 5 shows a schematic, perspective sectional view of a device according to the invention for heating, ventilating and/or air conditioning a vehicle interior;
- Figure 6 shows a perspective detailed view of a flap assembly for the device according to Figure 5;
- Figure 7 shows a section through the device according to Figure 5 in the region of a second mixed air outlet; and
- Figure 8 shows a section through the device according to Figure 5 in the region of a first mixed air outlet.

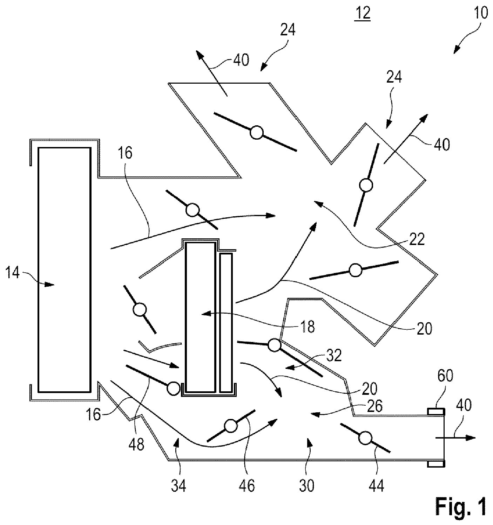

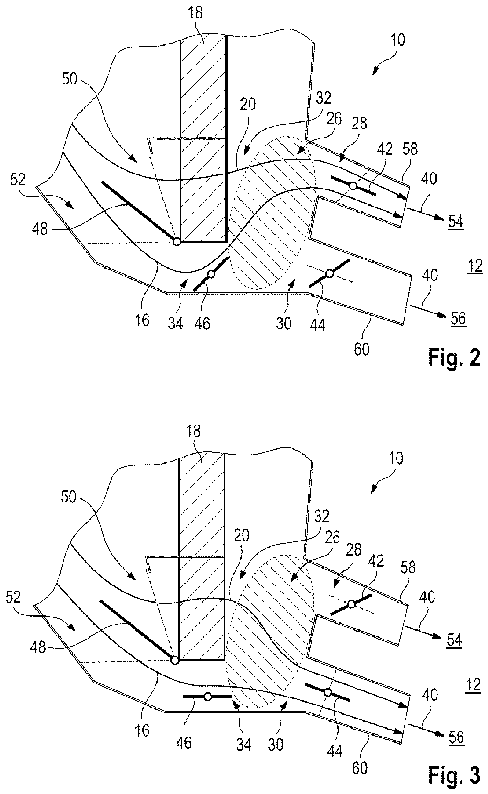

Figure 1 shows a device 10 embodied as an air conditioner for heating, ventilating and/or air conditioning a vehicle interior 12, with an evaporator 14, through which air can flow, for generating cold air 16 which can be supplied from vehicle interior 12 as well as a heating element 18, through which air can flow, for generating hot air 20 which can be supplied from vehicle interior 12. Cold air 16 and hot air 20 are supplied on the one hand to an air-mixing chamber 22 which air conditions a front region of vehicle interior 12 via mixed air outlets 24, and on the other hand to an air-mixing chamber 26 which air conditions a back seat region of vehicle interior 12 via mixed air outlets 28, 30 (see also Figures 2 and 3). With reference to heating element 18, in particular two separate bypass ducts are provided, wherein one bypass duct guides cold air 16 to air-mixing chamber 22 while bypassing heating element 18, which air-mixing chamber 22 is assigned to the front region of vehicle interior 12, and the other bypass duct guides cold air 16 to air-mixing chamber 26 while bypassing heating element 18, which air-mixing chamber 26 is assigned to the back seat region of vehicle interior 12.

Figures 2 and 3 show a schematic detailed section of the air conditioner according to Figure 1 in the region of air-mixing chamber 26 assigned to the vehicle back seats. Although the invention is described below only with reference to air-mixing chamber 26, it is, however, clear to a person skilled in the art in the technical field of vehicle air conditioning that the described measures can be applied in an analogous manner to air-mixing chamber 22, wherein the advantages indicated below for the back seat region of vehicle interior 12 are equally produced in the air conditioning of a front region of vehicle interior 12.

The device 10 for heating, ventilating and/or air conditioning a vehicle interior 12 comprises according to Figures 2 and 3 air-mixing chamber 26 which has a hot air inlet 32 for supplying hot air 20 into air-mixing chamber 26, a cold air inlet 34 for supplying cold air 16 into air-mixing chamber 26 as well as a first mixed air outlet 28 and a second mixed air outlet 30 for discharging mixed air 40 out of the air-mixing chamber 26 into different (back seat) regions of vehicle interior 12, a first control flap 42 assigned to first mixed air outlet 28 for control of a mixed air mass flow at first mixed air outlet 28, and a second control flap 44 assigned to second mixed air outlet 30 for control of a mixed air mass flow at second mixed air outlet 30.

Moreover, there is assigned to precisely one of air inlets 32, 34 an adjustable air-guiding element 46 for throttling and/or deflection of hot air 20 or cold air 16 which flows through the precisely one air inlet 32, 34 into air-mixing chamber 26. In one preferred embodiment variant according to Figures 2 and 3, adjustable air-guiding element 46 is assigned concretely to cold air inlet 34 in order to throttle and/or deflect cold air 16 which flows through cold air inlet 34 into air-mixing chamber 26.

In the represented exemplary embodiment, adjustable air-guiding element 46 is a spoiler-type, pivotable flap which is arranged in air-mixing chamber 26 or on the edge of air-mixing chamber 26 and on cold air inlet 34.

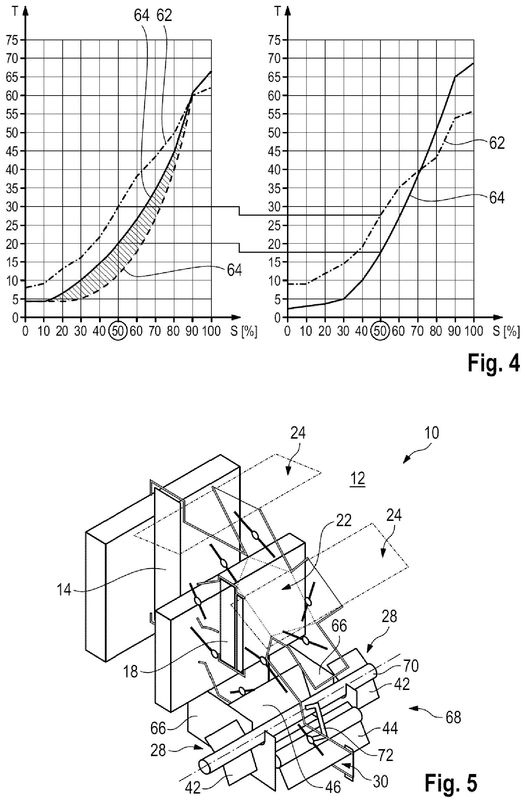

Air-guiding element 46 is, according to Figures 2 and 3, formed as a separate flap with its own actuating drive (not shown), but can alternatively also be mechanically coupled to at least one of control flaps 42, 44 (see Figures 5 to 8).

Moreover, a mixed air flap 48 is provided upstream of air inlets 32, 34 of air-mixing chamber 26, which mixed air flap 48 sets the ratio between hot air 20 supplied via hot air inlet 32 and cold air 16 supplied via cold air inlet 34 for temperature control of mixed air 40. In concrete terms, mixed air flap 48 sits upstream of heating element 18, through which air flows, in order (for the vehicle back seats) to control the air quantity which flows through heating element 18 to hot air inlet 32, wherein mixed air flap 48 can project both into an inflow duct 50 for the air flowing to heating element 18 and into a cold air duct 52 leading to cold air inlet 34 in order to change the duct cross-sections.

As already mentioned, mixed air outlets 28, 30 represented in Figures 2 and 3 are assigned to the vehicle back seats for discharge of mixed air 40 out of air-mixing chamber 26 into different regions of vehicle interior 12. In concrete terms, first mixed air outlet 28 is assigned to heater floor outlets 54 and second mixed air outlet 30 is assigned to an air space 56 which lies above heater floor outlets 54. Moreover, a mixed air duct 58, 60 is linked to each of mixed air outlets 28, 30, which mixed air duct 58, 60 extends from respective mixed air outlet 28, 30 up to an air diffuser (not represented) in heater floor outlets 54 or air space 56 of the vehicle back seats.

While device 10, embodied as an air conditioner, for heating, ventilating and/or air conditioning vehicle interior 12 according to Figure 2 is in its winter mode, shown vehicle air conditioner according to Figure 3 is represented in its summer mode.

In the case of a comparison of Figures 2 and 3, it becomes clear that, in winter mode, an air mass flow is guided to a greater extent to first mixed air outlet 28, which is assigned to heater floor outlets 54 in the vehicle back seats, whereas in summer mode the air mass flow is supplied to a greater extent to second mixed air outlet 30, which is assigned to the air space 56 lying above heater floor outlets 54 in the vehicle back seats. This change can be carried out, for example, fully automatically via an actuating motor. The position of mixed air flap 48 is unchanged in Figures 2 and 3 so that similar, ideally almost identical temperature ratios should be set in the vehicle back seats.

In order to illustrate the temperature conditions in the vehicle back seats, Figure 4 shows two diagrams in which in each case air temperature T at mixed air outlets 28, 30 is plotted as a function of position s of mixed air flap 48, wherein the left-hand diagram is assigned to the winter mode and the right-hand diagram is assigned to the summer mode of the vehicle air conditioner. Position s of mixed air flap 48 is indicated in percentages, wherein s = 0% corresponds to a closure of inflow duct 50 (and thus a complete release of cold air duct 52) and s = 100% to a complete release of inflow duct 50 (and thus a closure of cold air duct 52). For a comparison between the winter mode and the summer mode, a central setting position of mixed air flap 48 is emphasized in Figures 2 and 3, in the case of which both inflow duct 50 and also cold air duct 52 are released to approximately 50%.

In the diagrams according to Figure 4, in each case two temperature curves 62, 64 are represented, wherein temperature curve 62 indicates the temperature at first mixed air outlet 28 which is assigned to heater floor outlets 54 of the vehicle back seats, and temperature curve 64 indicates the temperature profile at second mixed air outlet 30 which is assigned to air space 56 in the vehicle back seats. In the winter mode of the vehicle air conditioner (Figure 4, left-hand diagram), the effect of air-guiding element 46 is illustrated in that temperature curve 64 assigned to air space 56 of the vehicle back seats is represented both with air-guiding element 46 (continuous curve) and without air-guiding element 46 (dashed curve). In other words, this means that the hatched region between continuous and dashed temperature curve 64 illustrates, in the winter mode, the temperature control by air-guiding element 46.

A comparison of air temperatures T at first mixed air outlet 28 and at the second mixed air outlet 30 in a central position s ≈ 50% of mixed air flap 48 illustrates that the entire temperature level in the winter mode (Figure 4, left-hand diagram) is slightly increased (which is thoroughly desirable), but the temperature difference between the two mixed air outlets 28, 30 remains approximately constant and according to Figure 4 lies around approximately 10°C. Without air-guiding element 46, second mixed air outlet 30 throttled by second control flap 44 would, in the winter mode, be acted upon excessively by cold air 16 which flows in via cold air outlet 34, which would result in an undesirable temperature drop at second mixed air outlet 30 (see Figure 4, dashed temperature curve 64 in the left-hand diagram).

According to Figure 4, air-guiding element 46 only influences temperature curve 64, but not temperature curve 62. This is due to the fact that adjustable air-guiding element 46, in the present exemplary embodiment, extends upstream of second mixed air outlet 30, but not upstream of first mixed air outlet 28 in air-mixing chamber 26.

A corresponding, concrete exemplary embodiment of device 10 for heating, ventilating and/or air conditioning vehicle interior 12 is represented in greater detail in Figures 5 to 8 and is described in greater detail below.

According to Figure 5, two first mixed air outlets 28 spaced apart from one another are provided, wherein a second mixed air outlet 30 is arranged between both first mixed air outlets 28. This corresponds to normal ventilation constructions in the vehicle back seats in which first mixed air outlets 28 assigned to heater floor outlets 54 are arranged laterally opposite (for example, behind the driver or passenger seat) and second mixed air outlet 30 assigned to air space 56 is arranged approximately centrally (for example, in a central console).

As indicated in Figure 5, in each case a deflector 66 is arranged between first mixed air outlets 28 and second mixed air outlet 30 in order to prevent a mixing and mutual influencing of the mixed air flows.

Moreover, in Figure 5, in each case a pivotable first control flap 42 is assigned to both first mixed air outlets 28 and a pivotable second control flap 44 is assigned to second mixed air outlet 30, wherein control flaps 42, 44, in the present exemplary embodiment, are mechanically coupled to one another and correspondingly form a coupled flap assembly 68.

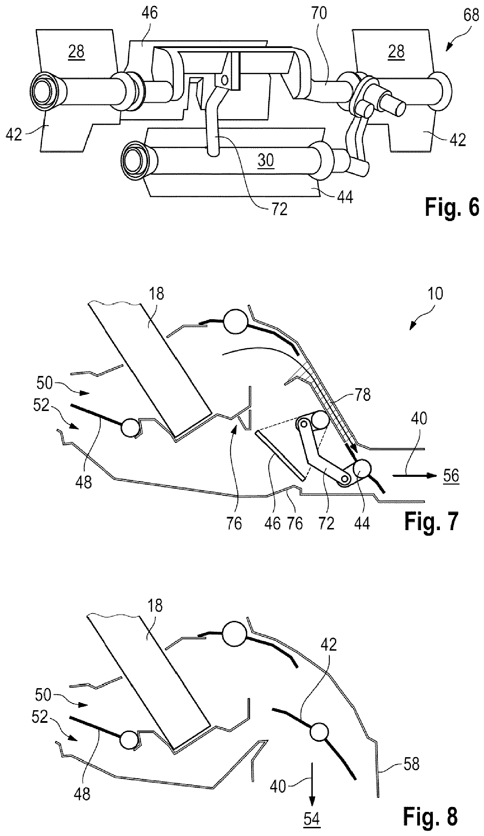

A perspective detailed view of said flap assembly 68 is represented in Figure 6. Both first control flaps 42 are connected rotationally conjointly here by a shaft 70, whereas pivotable second control flap 44 is coupled via a connecting element 72 mechanically, in particular kinematically to shaft 70. Both first control flaps 42 are preferably coupled in the opposite direction to second control flap 44 so that second control flap 44 is closed during opening of first control flaps 42 and is opened during closing of first control flaps 42.

Adjustable air-guiding element 46 is also particularly preferably coupled mechanically to first control flaps 42 and/or second control flap 44 so that air-guiding element 46 is adjusted together with first control flaps 42 and/or second control flap 44. According to Figure 6, adjustable air-guiding element 46 is connected in particular rotationally conjointly to shaft 70 and correspondingly also rotationally conjointly to first control flaps 42.

As a result, premountable flap assembly 68 comprises for device 10 for heating, ventilating and/or air conditioning a vehicle interior 12 in the present exemplary embodiment both pivotable first control flaps 42, pivotable second control flap 44 and adjustable air-guiding element 46, wherein first control flaps 42 and second control flap 44 are mechanically coupled by connecting element 72 so that second control flap 44 is closed during opening of first control flap 42 and is opened during closing of first control flap 42.

Moreover, air-guiding element 46 is rotationally conjointly connected to first control flaps 42.

In Figures 7 and 8 there is in each case represented a detailed section of device 10 for heating, ventilating and/or air conditioning vehicle interior 12 through air-mixing chamber 26 with installed flap assembly 68 according to Figure 6, wherein Figure 7 shows a section in the region of second control flap 44 and Figure 8 shows a section in the region of first control flap 42. It becomes clear here that adjustable air-guiding element 46 is arranged between cold air inlet 34 and second mixed air outlet 30 in air mixing chamber 26. An air mass flow at first mixed air outlets 28 is, however, not influenced or is only insignificantly influenced by air-guiding element 46 (see Figure 8).

According to Figure 7, air-mixing chamber 26 is delimited by a housing 74, wherein housing 74 has, adjacent to adjustable air-guiding element 46, one or more throttle projections 76 for setting a desired flow cross-section between housing 74 and air-guiding element 46. An optional air-guiding duct 78 is furthermore also indicated in Figure 7, which duct 78 is adjacent to hot air inlet 32 and guides hot air 20 from there directly to second mixed air outlet 30.

These optional additional measures such as throttle projections 76 and air-guiding duct 78 are ultimately supposed to support the action of mixed air flap 48 and keep the desired temperature differences between first mixed air outlet 28 and second mixed air outlet 30 substantially constant independently of the operating mode of the vehicle air conditioner. In particular, an undesirable drop in air temperature at second mixed air outlet 30 should be prevented in the winter mode of the vehicle air conditioner (see Figure 4, dashed temperature curve 64).

## Claims

1. Device for heating, ventilating and/or air conditioning a vehicle interior (12), with
an air-mixing chamber (26) which has a hot air inlet (32) for supplying hot air (20) into the air-mixing chamber (26), a cold air inlet (34) for supplying cold air (16) into the air-mixing chamber (26) as well as a first mixed air outlet (28) and a second mixed air outlet (30) for discharging mixed air (40) out of the air-mixing chamber (26) into different regions of the vehicle interior (12),
a first control flap (42) assigned to the first mixed air outlet (28) for control of a mixed air mass flow at the first mixed air outlet (28), and
a second control flap (44) assigned to the second mixed air outlet (30) for control of a mixed air mass flow at the second mixed air outlet (30),
wherein there is assigned to one of the air inlets (32, 34) an adjustable air-guiding element (46) for throttling and/or deflection of the hot air (20) or cold air (16) which flows through one air inlet (32, 34) into the air-mixing chamber (26),
wherein the air-guiding element (46) is arranged between the cold air inlet (34) and the second mixed air outlet (30) in the air-mixing chamber (26),
wherein the adjustable air-guiding element (46) is assigned to the cold air inlet (34) and can throttle and/or deflect the cold air (16) which flows through the cold air inlet (34) into the air-mixing chamber (26), **characterized in that** a mixed air flap (48) is provided which sets the ratio between hot air (20) supplied via the hot air inlet (32) and cold air (16) supplied via the cold air inlet (34) for temperature control of the mixed air (40).

2. Device according to claim 1,
**characterized in that** the mixed air flap (48) sits upstream of a heating element (18) through which air flows in order to control the air quantity which flows through the heating element (18) to the hot air inlet (32), wherein the mixed air flap (48) can project both into an inflow duct (50) for the air flowing to the heating element (18) and into a cold air duct (52) leading to the cold air inlet (34) in order to change the duct cross-sections.

3. Device according to any one of the preceding claims, **characterized in that** two first mixed air outlets (28) spaced apart from one another are provided and a second mixed air outlet (30) is arranged between the two first mixed air outlets (28) .

4. Device according to Claim 3, **characterized in that** in each case a deflector (66) is arranged between the first mixed air outlets (28) and the second mixed air outlet (30).

5. Device according to Claim 3 or 4, **characterized in that** in each case a pivotable first control flap (42) is assigned to both first mixed air outlets (28), wherein the two first control flaps (42) are connected rotationally conjointly by a shaft (70).

6. Device according to any one of the preceding claims, **characterized in that** the adjustable air-guiding element (46) is mechanically coupled to the first control flap (42) and/or the second control flap (44) so that the air-guiding element (46) is adjusted with the first control flap (42) and/or the second control flap (44).

7. Device according to Claim 5 or 6, **characterized in that** the adjustable air-guiding element (46) is connected rotationally conjointly to the shaft (70) .

8. Device according to Claim 5 or 7, **characterized in that** a pivotable second control flap (44), which is mechanically coupled to the shaft (70), is assigned to the second mixed air outlet (30).

9. Device according to any one of the preceding claims, **characterized in that** the adjustable air-guiding element (46) is arranged upstream of the second mixed air outlet (30) in the air-mixing chamber (26).

10. Device according to any one of the preceding claims, **characterized in that** the air-mixing chamber (26) is delimited by a housing (74), wherein the housing (74) has, adjacent to the adjustable air-guiding element (46), a throttle projection (76) for setting a desired flow cross-section between the housing (74) and the air-guiding element (46).

11. A vehicle comprising a device according to claim 1 or 2, comprising vehicle back seats, wherein the mixed air outlets (28, 30) are assigned to said vehicle back seats.

12. A vehicle according to claim 11 or comprising a device according to claim 1 or 2, comprising the vehicle interior (12) and heater floor outlets (54) of the vehicle interior (12), wherein the first mixed air outlet (28) is assigned to the heater floor outlets (54) of the vehicle interior (12) and the second mixed air outlet (30) is assigned to an air space (56) of the vehicle interior (12) which lies above the heater floor outlets (54).

## Patentansprüche

1. Vorrichtung zur Beheizung, Belüftung und/oder Klimatisierung eines Fahrzeuginnenraums (12), mit
einem Luftmischraum (26), der einen Warmlufteintritt (32) zum Zuführen von Warmluft (20) in den Luftmischraum (26), einen Kaltlufteintritt (34) zum Zuführen von Kaltluft (16) in den Luftmischraum (26) sowie einen ersten Mischluftaustritt (28) und einen zweiten Mischluftaustritt (30) zum Abführen von Mischluft (40) aus dem Luftmischraum (26) in unterschiedliche Bereiche des Fahrzeuginnenraums (12) aufweist,
einer dem ersten Mischluftaustritt (28) zugeordneten, ersten Steuerklappe (42) zum Steuern eines Mischluftmassenstroms am ersten Mischluftaustritt (28), und
einer dem zweiten Mischluftaustritt (30) zugeordneten, zweiten Steuerklappe (44) zum Steuern eines Mischluftmassenstroms am zweiten Mischluftaustritt (30),
wobei einem der Lufteinlässe (32, 34) ein verstellbares Luftleitelement (46) zur Drosselung und/oder Ablenkung der durch den einen Lufteintritt (32, 34) in den Luftmischraum (26) strömenden Warmluft (20) oder Kaltluft (16) zugeordnet ist,
wobei
das Luftleitelement (46) zwischen dem Kaltlufteintritt (34) und dem zweiten Mischluftaustritt (30) im Luftmischraum (26) angeordnet ist,
wobei das verstellbare Luftleitelement (46) dem Kaltlufteintritt (34) zugeordnet ist und die durch den Kaltlufteintritt (34) in den Luftmischraum (26) strömende Kaltluft (16) drosseln und/oder ablenken kann, **dadurch gekennzeichnet, dass** eine Mischluftklappe (48) vorgesehen ist, die zur Temperatursteuerung der Mischluft (40) das Verhältnis zwischen einer über den Warmlufteintritt (32) zugeführten Warmluft (20) und einer über den Kaltlufteintritt (34) zugeführten Kaltluft (16) einstellt.

2. Vorrichtung nach Anspruch 1,
**dadurch gekennzeichnet, dass** die Mischluftklappe (48) stromaufwärts eines luftdurchströmten Heizelements (18) sitzt, um die durch das Heizelement (18) zum Warmlufteintritt (32) strömende Luftmenge zu steuern, wobei die Mischluftklappe (48) sowohl in einen Zuströmkanal (50) für die zum Heizelement (18) strömende Luft als auch in einen zum Kaltlufteintritt (34) führenden Kaltluftkanal (52) ragen kann, um die Kanalquerschnitte zu ändern.

3. Vorrichtung nach einem der vorhergehenden Ansprüche, **dadurch gekennzeichnet, dass** zwei voneinander beabstandete erste Mischluftauslässe (28) vorgesehen sind und zwischen den beiden ersten Mischluftauslässen (28) ein zweiter Mischluftaustritt (30) angeordnet ist.

4. Vorrichtung nach Anspruch 3, **dadurch gekennzeichnet, dass** zwischen den ersten Mischluftauslässen (28) und dem zweiten Mischluftaustritt (30) jeweils eine Ablenkvorrichtung (66) angeordnet ist.

5. Vorrichtung nach Anspruch 3 oder 4, **dadurch gekennzeichnet, dass** den beiden ersten Mischluftauslässen (28) jeweils eine schwenkbare erste Steuerklappe (42) zugeordnet ist, wobei die beiden ersten Steuerklappen (42) durch eine Welle (70) drehfest verbunden sind.

6. Vorrichtung nach einem der vorhergehenden Ansprüche, **dadurch gekennzeichnet, dass** das verstellbare Luftleitelement (46) mit der ersten Steuerklappe (42) und/oder der zweiten Steuerklappe (44) mechanisch so gekoppelt ist, dass das Luftleitelement (46) mit der ersten Steuerklappe (42) und/oder der zweiten Steuerklappe (44) verstellt wird.

7. Vorrichtung nach Anspruch 5 oder 6, **dadurch gekennzeichnet, dass** das verstellbare Luftleitelement (46) drehfest mit der Welle (70) verbunden ist.

8. Vorrichtung nach Anspruch 5 oder 7, **dadurch gekennzeichnet, dass** dem zweiten Mischluftaustritt (30) eine schwenkbare zweite Steuerklappe (44) zugeordnet ist, die mechanisch mit der Welle (70) gekoppelt ist.

9. Vorrichtung nach einem der vorhergehenden Ansprüche, **dadurch gekennzeichnet, dass** das verstellbare Luftleitelement (46) stromaufwärts des zweiten Mischluftaustritts (30) im Luftmischraum (26) angeordnet ist.

10. Vorrichtung nach einem der vorhergehenden Ansprüche, **dadurch gekennzeichnet, dass** der Luftmischraum (26) durch ein Gehäuse (74) begrenzt wird, wobei das Gehäuse (74) angrenzend an das verstellbare Luftleitelement (46) einen Drosselvorsprung (76) zur Einstellung eines gewünschten Strömungsquerschnitts zwischen dem Gehäuse (74) und dem Luftleitelement (46) aufweist.

11. Fahrzeug, das eine Vorrichtung nach Anspruch 1 oder 2 umfasst, umfassend Fahrzeughintersitze, wobei die Mischluftauslässe (28, 30) den Fahrzeughintersitzen zugeordnet sind.

12. Fahrzeug nach Anspruch 11 oder eine Vorrichtung nach Anspruch 1 oder 2 umfassend, umfassend den Fahrzeuginnenraum (12) und Fußraum (54) des Fahrzeuginnenraums (12), wobei der erste Mischluftaustritt (28) dem Fußraum (54) des Fahrzeuginnenraums (12) und der zweite Mischluftaustritt (30) einem über dem Fußraum (54) liegenden Luftraum (56) des Fahrzeuginnenraums (12) zugeordnet ist.

## Revendications

1. Dispositif de chauffage, de ventilation et/ou de climatisation d'un habitacle de véhicule (12), comportant
une chambre de mélange d'air (26) qui comporte une entrée d'air chaud (32) servant à introduire de l'air chaud (20) dans la chambre de mélange d'air (26), une entrée d'air froid (34) servant à introduire de l'air froid (16) dans la chambre de mélange d'air (26) ainsi qu'une première sortie d'air mélangé (28) et une seconde sortie d'air mélangé (30) servant à rejeter de l'air mélangé (40) hors de la chambre de mélange d'air (26) dans différentes régions de l'habitacle de véhicule (12),
un premier volet de régulation (42) assigné à la première sortie d'air mélangé (28) pour réguler un débit massique d'air mélangé au niveau de la première sortie d'air mélangé (28), et
un second volet de régulation (44) assigné à la seconde sortie d'air mélangé (30) pour réguler un débit massique d'air mélangé au niveau de la seconde sortie d'air mélangé (30),
un élément de guidage d'air réglable (46) étant assigné à l'une des entrées d'air (32, 34) pour restreindre et/ou dévier l'air chaud (20) ou l'air froid (16) qui s'écoule à travers une entrée air (32, 34) dans la chambre de mélange d'air (26),
l'élément de guidage d'air (46) étant disposé entre l'entrée d'air froid (34) et la seconde sortie d'air mélangé (30) dans la chambre de mélange d'air (26),
l'élément de guidage d'air réglable (46) étant assigné à l'entrée d'air froid (34) et pouvant restreindre et/ou dévier l'air froid (16) qui s'écoule à travers l'entrée d'air froid (34) dans la chambre de mélange d'air (26),
**caractérisé en ce qu'**un volet à air mélangé (48) est prévu, celui-ci définissant le rapport entre l'air chaud (20) introduit par l'entrée d'air chaud (32) et l'air froid (16) introduit par l'entrée d'air froid (34) à des fins de régulation de la température de l'air mélangé (40) .

2. Dispositif selon la revendication 1, **caractérisé en ce que** le volet à air mélangé (48) est placé en amont d'un élément de chauffage (18) à travers lequel l'air s'écoule afin de réguler la quantité d'air qui s'écoule à travers l'élément de chauffage (18) vers l'entrée d'air chaud (32), le volet à air mélangé (48) pouvant faire saillie à la fois dans un conduit d'écoulement entrant (50) pour l'air s'écoulant vers l'élément de chauffage (18) et dans un conduit d'air froid (52) menant à l'entrée d'air froid (34) afin de modifier les sections transversales des conduits.

3. Dispositif selon l'une quelconque des revendications précédentes, **caractérisé en ce que** deux premières sorties d'air mélangé (28) espacées l'une de l'autre sont prévues et une seconde sortie d'air mélangé (30) est disposée entre les deux premières sorties d'air mélangé (28).

4. Dispositif selon la revendication 3, **caractérisé en ce que**, dans chaque cas, un déflecteur (66) est disposé entre les premières sorties d'air mélangé (28) et la seconde sortie d'air mélangé (30).

5. Dispositif selon la revendication 3 ou 4, **caractérisé en ce que**, dans chaque cas, un premier volet de régulation pivotant (42) est assigné aux deux premières sorties d'air mélangé (28), les deux premiers volets de régulation (42) étant reliés sur le plan rotationnel par un arbre (70).

6. Dispositif selon l'une quelconque des revendications précédentes, **caractérisé en ce que** l'élément de guidage d'air réglable (46) est accouplé mécaniquement au premier volet de régulation (42) et/ou au second volet de régulation (44) de telle sorte que l'élément de guidage d'air (46) soit réglé avec le premier volet de régulation (42) et/ou le second volet de régulation (44).

7. Dispositif selon la revendication 5 ou 6, **caractérisé en ce que** l'élément de guidage d'air réglable (46) est relié sur le plan rotationnel à l'arbre (70).

8. Dispositif selon la revendication 5 ou 7, **caractérisé en ce qu'**un second volet de régulation pivotant (44), qui est accouplé mécaniquement à l'arbre (70), est assigné à la seconde sortie d'air mélangé (30).

9. Dispositif selon l'une quelconque des revendications précédentes, **caractérisé en ce que** l'élément de guidage d'air réglable (46) est placé en amont de la seconde sortie d'air mélangé (30) dans la chambre de mélange d'air (26).

10. Dispositif selon l'une quelconque des revendications précédentes, **caractérisé en ce que** la chambre de mélange d'air (26) est délimitée par un logement (74), le logement (74) comportant, à côté de l'élément de guidage d'air réglable (46), une saillie de restriction (76) servant à établir une section transversale d'écoulement souhaitée entre le logement (74) et l'élément de guidage d'air (46).

11. Véhicule comprenant un dispositif selon la revendication 1 ou 2, comprenant des sièges arrière de véhicule, les sorties d'air mélangé (28, 30) étant assignées auxdits sièges arrière de véhicule.

12. Véhicule selon la revendication 11 ou comprenant un dispositif selon la revendication 1 ou 2, comprenant l'habitacle de véhicule (12) et des sorties de dispositif de chauffage de plancher (54) de l'habitacle de véhicule (12), la première sortie d'air mélangé (28) étant assignée aux sorties de dispositif de chauffage de plancher (54) de l'habitacle de véhicule (12) et la seconde sortie d'air mélangé (30) étant assignée à un espace de l'habitacle de véhicule (12) qui se trouve au-dessus des sorties de dispositif de chauffage de plancher (54) .
